Europäisches Patentamt

European Patent Office

Office européen des brevets

(11) Publication number: **0 258 827 B1**

# EUROPEAN PATENT SPECIFICATION

(45) Date of publication of patent specification: **17.06.92**    (51) Int. Cl.5: **F16L 47/02**, B29C 65/22

(21) Application number: **87112489.7**

(22) Date of filing: **27.08.87**

(54) **A method for connecting a plastic pipe end to a plastic welding sleeve.**

(30) Priority: **28.08.86 DK 4106/86**

(43) Date of publication of application:
**09.03.88 Bulletin 88/10**

(45) Publication of the grant of the patent:
**17.06.92 Bulletin 92/25**

(84) Designated Contracting States:
**AT BE CH DE ES FR GB GR IT LI LU NL SE**

(56) References cited:
**EP-A- 0 035 750       EP-A- 0 171 450
AT-B- 361 748          CH-A- 532 996
DE-A- 1 615 092        FR-A- 2 516 439
US-A- 3 506 519**

(73) Proprietor: **TARCO ENERGI A/S
Erritso Mollebanke 10
DK-7000 Fredericia(DK)**

(72) Inventor: **Larsen, Christian
Plantagevej 44
DK-7000 Fredericia(DK)**
Inventor: **Munck, Michael
Fredericiavej 16
DK-7000 Fredericia(DK)**

(74) Representative: **Sajda, Wolf E., Dipl.-Phys. et al
MEISSNER, BOLTE & PARTNER Widenmayer-strasse 48 Postfach 86 06 24
W-8000 München 86(DE)**

## Description

The invention relates to a method for connecting a plastic pipe end to a welding sleeve according to the pre-characterizing clause of claim 1 and a device for carrying out the method according to the pre-characterizing clause of claim 3.

When interconnecting insulated medium-carrying pipes having outer sheathings of plastics, such as district heating pipes, the medium-carrying pipes are initially welded together, whereafter the ends of the outer plastic sheathing pipes are interconnected by means of a sheathing or a sleeve, preferably in the form of a plastic welding sleeve, thereby covering the connection. Finally the connection is reinsulated by a foaming liquid, preferably polyurethane foam, being fed through an opening in the sleeve, said opening subsequently being tightly closed by means of a plug or the like. The most frequently used plastic welding sleeves are preferably provided with circumferential heating wires embedded or cast therein adjacent the inner surface of the sleeve so as to allow heating of the welding area between the sleeve and the pipe end.

US Patent No. 3 506 519 discloses a method for connecting a pipe and a pipe connecting piece by means of a welding sleeve inserted between, said welding sleeve consists of a heat conductor in form of a resistor wire, which is embedded in thermoplastics. During the welding process pressure from the outside is exerted by means of a tightening clip. However, this specification does not describe to fully automatically controlling the welding process for achievement of the desired final welding temperature.

Several types of loose heaters in form of heating conductors, which can be placed as circular windings, e.g. windings cast in plastic or inside the welding sleeve, said windings can be wound on the outside of a separate welding ring to be inserted between the pipe ends to be welded together, or said heating conductors can be placed in a labyrinth pattern on the outside of two sleeve halves to be welded with the pipe ends. The amount of heat given off from the heating conductors in said heaters is high close to the heating conductor and thereafter strongly decreasing in distance away from the heating conductor. This implies the great disadvantage that heat given off and consequently the temperature will vary in the welding area between the plastic welding sleeve and the pipe end.

The object of the present invention is to provide a fully automatic method for welding of a plastic pipe end to a plastic welding sleeve as well as a device for carrying out the method, whereby the desired final welding temperature is obtained independent of the actual amount of heat given off or left in the heater so that a welding of high strength is obtained at all times.

The method according to the invention is characterized by the steps of programming a microprocessor with a desired final welding temperature, a period said temperature is to be kept, and a specific increase value per time unit of either the value of current or the value of voltage of the electrical energy supplied to said heater, computing the ohmic resistance in the heater based on values of current and voltage when the heater is heated to a temperature corresponding to the softening temperature of the plastics and the specific increase value per time unit is obtained, computing the ohmic resistance of the heater at the final welding temperature, further heating said heater until the final welding temperature has been reached and controlling current and voltage so that the ohmic resistance of the heater at the final welding temperature is kept constant over said period.

In this manner it is achieved that a method for connecting a plastic pipe end to a plastic welding sleeve is provided, and said method, after the welding sleeve by means of a clamping device and, if necessary, heat supplied from the outside has been clamped over the pipe end and a heater inserted between said pipe end and the welding sleeve, makes it possible that the welding process between the welding sleeve and the pipe end is fully automatically controlled by a microprocessor, connected to the heater, and a welding generator in such a manner that the welding process and thus the achievement of the desired important final welding temperature is independent of outside factors, such as wind cooling and surrounding temperatures, and consequently the thermal energy left in the heater.

By the method according to the invention it is utilised that the change per time unit as concerns the non-applied current or voltage of the heater drops below a certain predetermined value, when the softening temperature of the plastic pipe end and the welding sleeve has been reached, as the heater then suddenly sinks into the surfaces of the plastic pipe end and the welding sleeve and thereby transfers substantially more heat to the plastic material than to the air, whereafter the microprocessor itself computes the ohmic resistance of the heater at above said temperature and at a desired final welding temperature, and then fully automatically controls the current and the voltage, until this final welding temperature has been reached and then kept for a subsequent predetermined period.

The heater is supplied with a constant current or a constant voltage and heated while the increase of said two values is continuously measured and registered until the increase per time unit drops below a predetermined value, whereupon the microprocessor computes the level, where the increase value corresponds to a desired predetermined final welding temperature, and that the microprocessor controls the continuous current and voltage after said temperature has been reached in such a manner that the final welding temperature is kept constant for a predetermined period thereafter.

By a particularly advantageous embodiment of the method according to the invention the current is kept constant until the final welding temperature has been reached.

For carrying out the method the device is characterized by measuring means for measuring a voltage and current of electrical energy supplied to the heater, the measuring means being connected to a microprocessor whereby the microprocessor is connected to said welding generator for controlling the same during the welding process, i.e. to control the current and the voltage supplied in such a manner that, when the final welding temperature has been reached, this temperature is kept constant for a predetermined time period thereafter.

As the heater is extensible in its longitudinal direction it may, irrespective of the actual diameter of said pipe end, which diameter, as mentioned, may vary within the diameter tolerances in question, be extended along the entire periphery of the pipe end while abutting said end. As an advantageous result hereof the heater is situated in the welding area between the welding sleeve and the plastic pipe end. As furthermore the heater is shaped as a network, a uniformly and evenly distributed emission of heat in the welding area is secured, whereby an especially close and strong welding is provided, as the desired welding temperature can just be maintained evenly in the entire welding area.

As the heater comprises a contact surface as small as possible it will during the heating process - when the in advance well-defined softening temperature of the material has reached - with great secureness and rapidity sink into the surface of the pipe end and the welding sleeve, whereby the microprocessor can precisely register that the measured change in voltage or current per time unit drops below a certain predetermined value due to the altered amount of heat given off by the heater. In this manner it is during the welding process possible for the microprocessor automatically to register a reference point with a known temperature corresponding to the well-defined softening temperature of the plastic material, without said temperature being measured in any way during said welding operation.

By a particularly simple embodiment the heater may according to the invention, when seen straightened in one plane, be U-shaped with a bottom portion being relatively long compared to the length of the sides of the U, the length of the bottom portion being adapted in such a manner that when mounted on the pipe the heater extends one time around and along the periphery of the pipe and the most spaced side rims of the U are situated immediately adjacent one another.

Furthermore, according to the invention, the heater may, when seen straightened in one plane, be shaped as two L's interconnected at the end of the long portion by an intermediary portion perpendicular thereto in such a manner that the short portions of the L's extend in opposite directions, and each long portion may be of a length adapted in such a manner that when mounted on the pipe the heater extends two times around and along the periphery of the pipe. In this manner the tape is uniformly extensible along the periphery of the pipe and at the same time a relatively large welding area is provided.

Moreover the heater may preferably be made of annealed expanded metal with pane-shaped openings of a size of preferably 3 times 3 mm.

In addition, the heater may adjacent the shortest and most spaced rims be provided with terminal-like ends communicating with electric cables. As a result the heater is particularly easily connected to the microprocessor and the welding generator.

Finally the mostly spaced, shortest rims of the heater may be provided with a list of plastics. In this manner the rims in question can abut one another during the mounting of the heater on the pipe end.

The invention will be described below with reference to the accompanying drawing, in which:

Figure 1 is an axial view partly in section of a plastic welding sleeve to be mounted by the carrying out of the method according to the invention,

Figure 2 is an axial view partly in section of the plastic welding sleeve pushed over two plastic pipe ends having heaters mounted thereon in advance,

Figure 3 corresponds to Figure 2, but after the plastic welding sleeve has been welded together with the pipe ends,

Figure 4 is a top view of the heater shown in sectional view in Figures 2 and 3,

Figure 5 illustrates a second embodiment of the heater according to the invention,

Figure 6 is a perspective view of the heater of Figure 5 mounted on a pipe end,

Figure 7 is a diagrammatic view of how the heater is connected to a microprocessor and a welding generator during the welding process, and

Figure 8 is a graphic view of the current and voltage measured versus the time during the welding process.

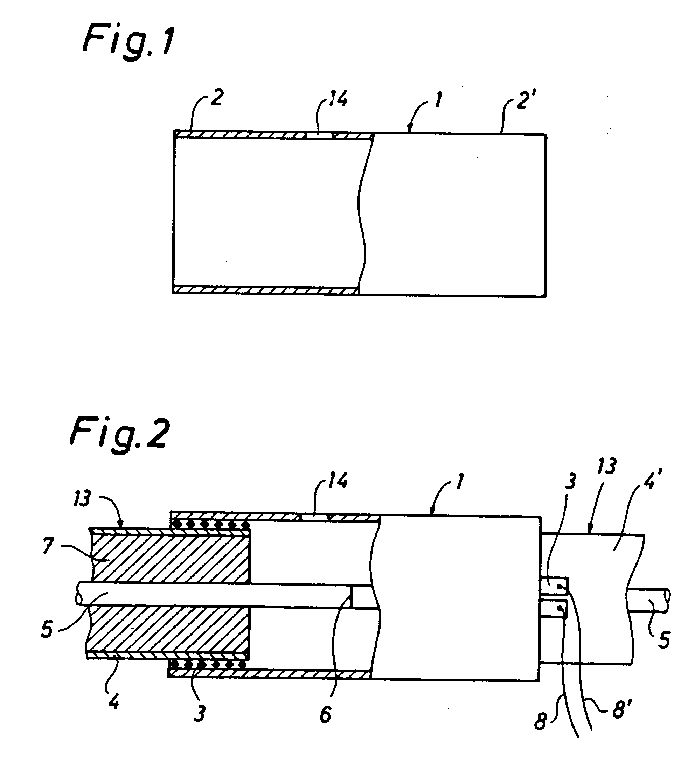

Below the method according to the invention is described with reference to an example of connecting a plastic welding sleeve 1 to two plastic pipe ends 4, 4' in the form of the outer sheathings of district heating pipes 13. These pipe ends 4, 4' have to be connected by means of a plastic welding sleeve 1 of a conventional type for connecting plastic pipe ends and is preferably a length of pipe of thermoplastic material, such as polyethylene. Under heating thermoplastic material reach initially a well-defined softening temperature followed by a temperature range called the glass-transition temperature, and finally the crystalline melting point, hereinafter referred to as the melting temperature, is reached. The plastic welding sleeve may also be made of a material comprising a "memory" when extended, such as crossbound polyethylene (PEX). Beyond the sheathing pipes 4, 4'the district heating pipes 13 comprise an insulating layer 7 in the form of polyurethane foam as well as a medium-carrying inner steel pipe 5, cf. Figure 2.

It is, however, a condition that the plastic pipe ends 4, 4' and the plastic welding sleeve 1 are made of the same plastics because the articles must, preferably, have the same softening temperature.

The outer sheathing pipes of district heating pipes are usually manufactured with diameter tolerances of about ± 2%, and accordingly the plastic welding sleeve 1 must be of an inner diameter corresponding to the largest possible outer diameter of the sheathing pipes of the district heating pipe plus the thickness of the heater plus a clearance. When plastic sheathing pipes of a nominal outer diameter or for instance 250 mm are to be interconnected, a plastic welding sleeve of an inner diameter of about 270 mm is to be used, a clearance of about 5 mm around the entire periphery of the largest possible diameter as well as a thickness of the heater of 2-2.5 mm being included. Thus the plastic welding sleeve is subjected to a heavy reduction of the diameter when it is to be clamped over the plastic pipe ends by means of a clamping device and heat supplied from the outside, of, the explanation below.

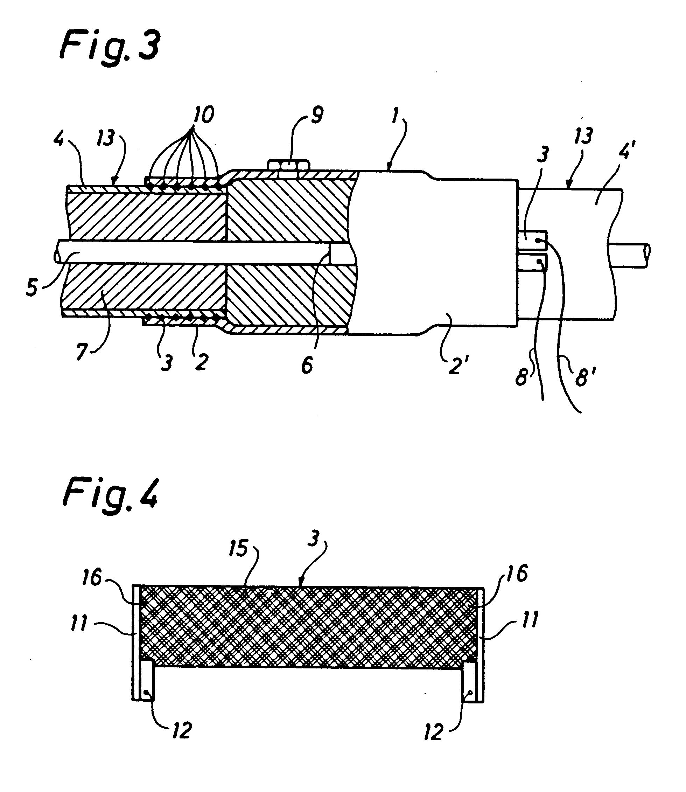

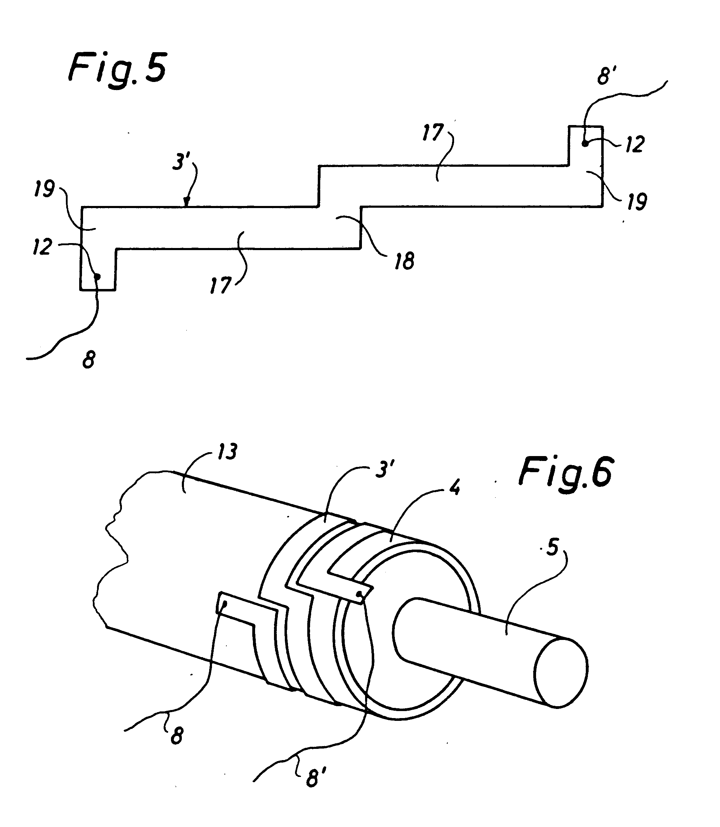

Figure 4 shows a straightened heater 3 according to the invention. The heater is shaped as a simple tape of a width of preferably 40-60 mm and with side rims 16. Terminal members 12 are mounted in continuation of the side rims 16 in such a manner that the heater 3 appears as a U. Plastic lists 11 are mounted along the side rims 16 and the terminal members 12. These lists abut one another when the heating tape is extended around the pipe end 4, 4' at the mounting thereon, whereby an electric contact between the portions of the heater is avoided. According to the invention the heater 3 is made of a network-like material and preferably of annealed expanded metal, i.e. a sheet material processed in such a manner that it appears with pane-shaped openings of preferably 3 times 3 mm and relatively sharp edges, cf. Figure 2 showing a sectional view of the heater 3. The said sharp edges of the network provide the contact surface of said heater 3, said contact surface consequently being very small compared to the thickness of the heater. The heater 3 is of a length which is slightly extended without the side rims 16 touching one another during the mounting on a plastic pipe end 4, 4' of the smallest possible diameter. Figure 5 illustrates a second embodiment of the heater 3' according to the invention, said embodiment being shaped as two L's interconnected by means of an intermediary portion 18 perpendicular to the long portion 17 of the ends and in such a manner that the short portions 19 of the L's are extending away from one another. The length of the long portions 17 of the L's is such that the heater 3' can extend two times around and along the periphery of the pipe end 4 so that the short portions 19 are situated immediately adjacent the intermediary portion 18 when the heater 3' is slightly extended at the mounting, cf. Figure 6. The mounting of the plastic pipe sleeve 1 on the plastic pipe ends 4, 4' is explained in greater details below.

Initially the plastic welding sleeve 1 is pushed over one district heating pipe 13 at a distance from the plastic pipe end 4 or 4'. Subsequently, the surfaces of each plastic pipe end 4, 4' is roughened by rasping. Now the medium-carrying inner steel pipes 5 of the district heating pipes 13 are welded together at 6 and a heater 3 is mounted on each plastic pipe end 4 and 4', respectively, by securing one end of said heater 3 to the plastic pipe ends 4 and 4', respectively, by means of for instance nails. Then the heater is extended around and along the periphery of the plastic pipe end 4 and 4', respectively, while abutting said periphery, and the opposite end of the heater 3 is subsequently secured by means of nails in such a manner that the two short side rims of the heater 3 are situated immediately adjacent one another. Now the plastic welding sleeve is pushed over the connection 6 with the non-insulated area in such a manner that the sleeve 1 covers the heater 3 secured on each plastic pipe end 4 and 4', respectively.

The ends 2 and 2', respectively, of the plastic welding sleeve 1 are clamped into abutment against the heater 3 in question by means of a known clamping device mounted on said sleeve 1 in the overlapping area at the plastic pipe end 4 and 4', respectively, and at the same time heat is supplied from the outside, e.g. by a gas burner. This clamping device remains mounted on the end 2 and 2', respectively, of the plastic welding sleeve 1 during the following welding of said plastic welding sleeve 1 onto the plastic pipe ends 4 and 4', respectively, whereby the sleeve 1 is subjected to radially inward stresses.

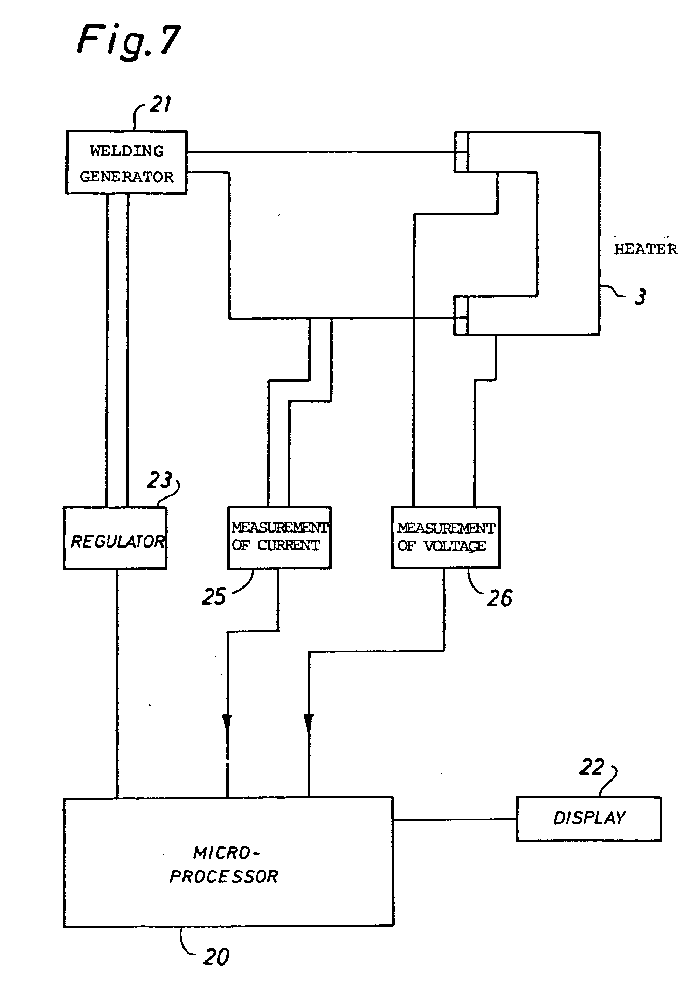

Subsequently, the terminals 12 of the heater 3 are connected to cables 8 and 8', respectively, communicating with the welding generator 21 and the microprocessor 20. Figure 7 is a diagrammatic view of the electric circuit used at the welding operation. The microprocessor 20 is provided with a display 22. A regulator 23 is coupled between the welding generator 21 and the microprocessor 20. Conduits 25 and 26 for measuring the current and the voltage, respectively are together with conduits from the regulator 23 coupled to the microprocessor 20.

Prior to the welding operation the microprocessor 20 can be programmed with the desired final welding temperature T, the period said temperature is to be kept, as well as with a specific increase value of the current I or the voltage U per time unit, at which the microprocessor 20 is to compute the ohmic resistance R in the heater 3. The microprocessor 20 can furthermore be programmed so as to provide a constant current I or a constant voltage U to the heater 3 during the welding operation. Usually a constant current I is used.

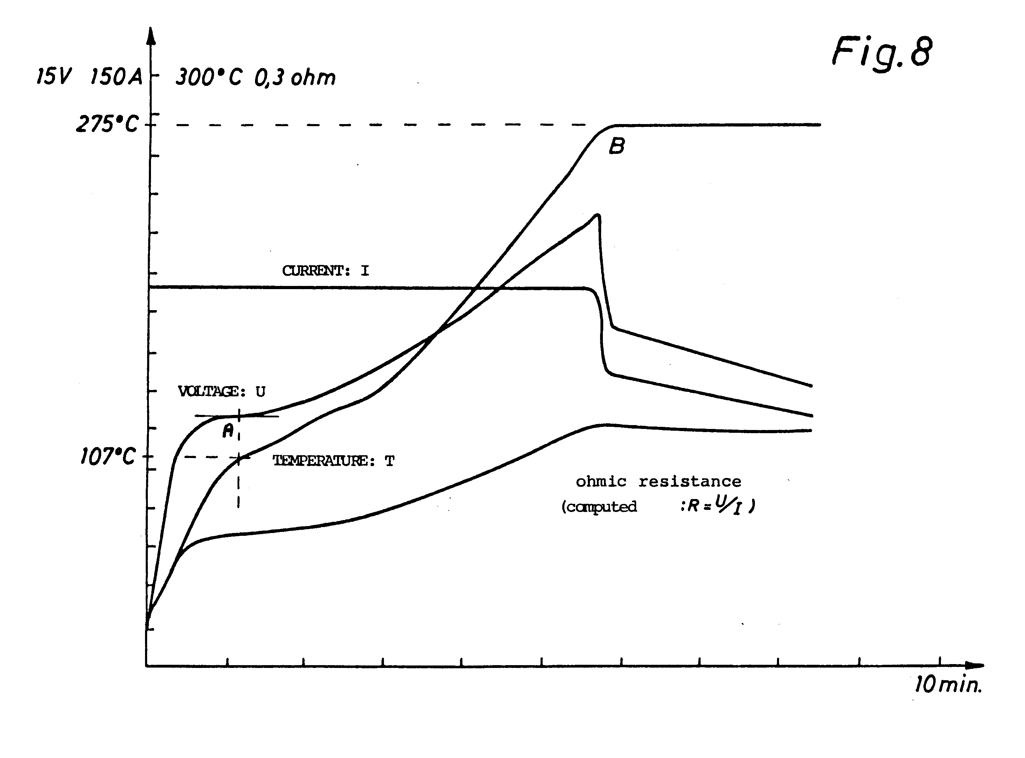

The welding operation is described below with reference to Figure 8 where the curves are based on tests and where the heater 3 has been supplied with a constant current I. The curves of Figure 8 show the current I through the heater 3 versus the time, the voltage U across the heater 3 versus the time, the temperature T - measured immediately adjacent the heater at test - versus the time, as well as the ohmic resistance U/I measured at any time. During the entire welding operation the microprocessor 20 measures and controls the current intensity I and the voltage U in such a manner that the current I is kept constant in the present case.

Prior to the welding operation the ohmic resistance R in the heater 3 is unkown bu the microprocessor computes said resistance at any time and temperature. The latter is a great advantage because the resistance of each heater 3 may vary on account of differences in the material and the dimension tolerances of the heater 3.

Now the heater 3 is supplied with a constant current I and is heated until the increase in voltage per time unit drops below the value preprogrammed in the microprocessor 20, cf. at the point A of Figure 8. Figure 8 clearly shows that the voltage curve flattens almost completely which is due to the heater 3 now being heated to a temperature corresponding to the softening temperature of the plastics of about 107°C. Therefore the heater 3 begins suddenly and simultaneously to sink into both the surfaces of the plastic welding sleeve 1 and the surfaces of the plastic pipe end 4 and 4', respectively. The microprocessor 20 has therefore been programmed in such a way that the temperature of the heater is set to about 107°C when said drop in the increase in voltage per time unit has been reached. Now the microprocessor 20 computes the ohmic resistance at this temperature $T_1$ = 107°C as

$$R_{T_1} = U_1/I_1 = \frac{6.3 \text{ V}}{97 \text{ A}} = 65 \text{ m}\Omega$$

Subsequently the microprocessor 20 computes the equivalent resistance at for instance 20°C as follows:

$$R_{20°C} = \frac{R_{T_1}}{1 + (T_1 - 20) \times \alpha}$$

where $\alpha$ is the coefficient of thermal expansion of the metal used. With copper wire it is about 0.006°C$^{-1}$

which implies that $R_{20°C}$ = 43 m$\Omega$

Subsequently the microprocessor 20 computes the ohmic resistance at the final welding temperature of for instance 275°C as follows:

$$R_{275°C} = R_{20°C} \times (1 + (T_2 - 20) \times \alpha)$$

which causes $R_{275°C}$ = 108 m$\Omega$

Now the microprocessor knows the resistance of the heater when said heater has been heated to the final welding temperature. As the current U and the voltage I are measured continuously, the microprocessor 20 can constantly compute R = U/I and allow the heater 3 to be heated until the final welding temperature has been reached, cf. point B of Figure 8, whereafter the microprocessor 20 controls the current U and the voltage I so that the resistance R is kept constant. As a result, the final welding temperature is kept constant for a predetermined period until the current supply and consequently the welding operation is stopped. In this manner the welding operation is performed without the temperature T being measured, the latter not being possible. Instead the fact is utilized that the heat given off per time unit by the heater 3 and consequently the increase in voltage thereacross per time unit are significantly changed when the heater 3 has been heated to the softening temperature of the plastics and thereby sinks into the plastic surfaces.

The welding of both ends of the plastic welding sleeve 1 to the pipe ends 4 and 4', respectively, can be carried out successively or simultaneously because the welding generator 21 and the microprocessor 20 can be programmed to control two heaters at the same time.

A great advantage of this welding operation is that the heater 3 is always situated in the welding areas between the plastic welding sleeve 1 and the plastic pipe end 4 and 4' in question. The stresses applied onto the plastic welding sleeve 1 from the outside by means of the clamping device during the welding operation imply that the heater penetrates both surfaces at the same time, whereby said surfaces are supplied with equally large amounts of heat. In this manner the entire welding area is supplied with a uniformly distributed amount of heat during the entire welding operation, which provides weldings of a hitherto unkown high strength and quality.

Finally the non-insulated area above the connection 6 is reinsulated by foaming liquids being fed through an opening 14 in the plastic welding sleeve 1, the non-insulated space thereby being filled with polyurethane foam. This opening 14 is then closed by a bolt 9 being screwed therein.

The invention has been described with reference to particular embodiments. The heater can for instance be shaped in many other ways and consequently be adapted to many of the tyres of pipe ends and welding sleeves to be interconnected. The welding generator and the microprocessor can also be programmed to control several heaters and thereby allow a simultaneous welding of all the pipes on a fitting with several branches, which saves time.

**Claims**

1. A method for connecting a plastic pipe end to a welding sleeve by use of a clamping device and a separate electrical heater (3) having a temperature-dependent ohmic resistance (R) and being connected to a welding generator (21) comprising the following steps:
   The heater (3) is extended along the periphery of the pipe (4, 4') abutting the periphery and is secured to said periphery;
   the welding sleeve (1) is pushed over the heater (3) so as to cover the heater (3);
   the welding sleeve (1) is pressed downwards by means of said clamping device so as to abut said heater (3);
   electrical energy is supplied from said welding generator (21) to said heater (3) for heating the same;
   **characterized** by the steps of
   programming a microprocessor (20) with a desired final welding temperature (T), a period said temperature (T) is to be kept, and a specific increase value per time unit of either the value of current (I) or the value of voltage (U) of the electrical energy supplied to said heater (3),
   computing the ohmic resistance (R) in the heater (3) based on values of current (I) and voltage (U) when the heater (3) is heated to a temperature (T1) corresponding to the softening temperature of the plastics and the specific increase value per time unit is obtained,
   computing the ohmic resistance of the heater (3) at the final welding temperature (T),
   further heating said heater (3) until the final welding temperature (T) has been reached, and controlling current (I) and voltage (U) so that the ohmic resistance (R) of the heater (3) at the final welding temperature (T) is kept constant over said period.

2. A method as claimed in claim 1, characterized by keeping the current value (I) constant until the final welding temperature (T) has been reached.

3. A device for carrying out the method of claim 1
   comprising a tape-shaped heater (3) having a temperature-dependent ohmic resistance and a welding generator (21) for supplying electrical energy to said heater (3),
   **characterized** by
   measuring means (25, 26) for measuring voltage and current of electrical energy supplied to said heater (3), said measuring means being connected to a microprocessor (20), whereby the microprocessor is connected to said welding generator (21) for controlling the same during the welding process, i.e. to control the current (I) and the voltage (U) supplied in such a manner that, when the final welding temperature has been reached, this temperature is kept constant for a predetermined time period thereafter.

4. A device as claimed in claim 3,
   **characterized** in
   that when seen straightened in one plane the heater (3) is U-shaped with a bottom portion (15) being relatively long compared to the length of the sides of the U, the length of the bottom portion being adapted in such a manner that when mounted on the pipe (4, 4') the heater extends one time around and along the periphery of the pipe (4, 4') and the most spaced side rims (16) of the U are situated immediately adjacent one another.

5. A device as claimed in claim 3, **characterized** in
that when seen straightened in one plane the heater (3) is shaped as two L's interconnected at the end of the long portion (17) by an intermediary portion (18) perpendicular thereto in such a manner that the short portions (19) of the L's extend in opposite directions, and that each long portion (17) is of a length adapted in such a manner that when mounted on the pipe (4) the heater (3) extends two times around and along the periphery of the pipe (4).

6. A device as claimed in one or more of claims 3 or 5, **characterized** in
that it is made of annealed expanded metal with pane-shaped openings of a size of preferably 3 times 3 mm.

7. A device as claimed in one or more of the claims 3 to 6, **characterized** in
that adjacent shortest and most spaced rims (16), the heater (3) is provided with terminal-like ends (12) communicating with electric cables (8, 8').

8. A device as claimed in one or more of the claims 3 to 7, **characterized** by
the mose spaced, shortest rims (16) of the heater (3) being provided with a list (11) of plastics.

**Revendications**

1. Procédé pour raccorder l'extrémité d'un tuyau en matière plastique à un manchon de soudage en utilisant un dispositif de serrage et un élément chauffant électrique séparé (3) ayant une résistance ohmique fonction de la température (R) et raccordé à un générateur de soudage (21), comprenant les stades suivants :
   - l'élément chauffant (3) est appliqué le long de la périphérie du tuyau (4,4') en contact avec cette périphérie et il est fixé sur cette périphérie;
   - le manchon de soudage (1) est poussé sur l'élément chauffant (3) de façon à le recouvrir;
   - le manchon de soudage (1) est pressé vers le bas au moyen d'un dispositif de serrage de façon à venir en butée sur l'élément chauffant (3);
   de l'énergie électrique est fournie par le générateur de soudage (21) à l'élément chauffant (3) pour chauffer ce dernier;
   caractérisé par les stades suivants :
   - programmer un micro-processeur (20) avec une température de soudage finale désirée (T), la période pendant laquelle on doit maintenir cette température (T), et la valeur de l'augmentation spécifique par temps unitaire de, soit la valeur de l'intensité (I), soit la valeur de la tension (U) de l'énergie électrique fournie à l'élément chauffant (3), calculer la résistance ohmique (R) dans l'élément chauffant (3) sur la base des valeurs d'intensité (I) et de tension (U) lorsque l'élément chauffant (3) est chauffé à une température $(T_1)$ correspondant à la température de ramollissement de la matière plastique, la valeur d'augmentation spécifique par temps unitaire étant obtenue,
   - calculer la résistance ohmique de l'élément chauffant (3) à la température de soudage finale (T),
   - chauffer ensuite l'élément chauffant (3) jusqu'à l'obtention de la température de soudage finale (T) et régler l'intensité (I) et la tension (U) de façon à maintenir constante sur cette période la résistance ohmique (R) de l'élément chauffant (3) pour la température de soudage finale (T).

2. Procédé selon la revendication 1, caractérisé en ce qu'on maintient constante la valeur de l'intensité (I) jusqu'à ce que la température de soudage finale (T) soit atteinte.

3. Dispositif pour mettre en oeuvre le procédé de la revendication 1, comprenant un élément chauffant en forme de ruban (3) ayant une résistance ohmique fonction de la température et un générateur de soudage (21) pour fournir de l'énergie électrique à cet élément chauffant (3),
caractérisé par des moyens de mesure (25,26) pour mesurer la tension et l'intensité de l'énergie électrique fournie à l'élément chauffant (3), ces moyens de mesure étant raccordés à un micro-processeur (20), le micro-processeur étant raccordé au générateur de tension (21) pour régler celui-ci pendant le processus de soudage, c'est-à-dire pour régler l'intensité (I) et la tension (U) fournies de telle manière que, lorsque la température de soudage finale a été atteinte, cette température soit maintenue constante pendant une période de temps prédéterminée après l'obtention de cette température.

4. Dispositif selon la revendication 3, caractérisé en ce que, vu allongé dans un plan, l'élément chauffant (3) a la forme d'un U avec une portion de fond (15) relativement longue par rapport à la longueur des côtés du U, la longueur de la portion de fond étant adaptée de telle manière que, lorsqu'il est monté sur le tuyau (4,4'), l'élément chauffant s'étend une fois autour et le long de la périphérie du tuyau (4,4'), tandis que les bords latéraux les plus éloignés (16) du U sont situés immédiatement adjacents l'un à l'autre.

5. Dispositif selon la revendication 3, caractérisé en ce que, vu allongé dans un plan, l'élément chauffant (3) a la forme de deux L raccordés eux elles au niveau de l'extrémité de la branche longue (17) par une portion intermédiaire (18) qui leur est perpendiculaire, de telle manière que les petites branches (19) des L s'étendent dans des directions opposées, et en ce que chaque grande branche (17) a une longueur adaptée pour que, lorsqu'il est monté sur le tuyau (4), l'élément chauffant (3) s'étende deux fois autour et le long de la périphérie du tuyau (4).

6. Dispositif selon une des revendications 3 ou 5, ou selon les deux, caractérisé en ce qu'il est fabriqué en un métal déployé recuit avec des ouvertures en forme de carreaux d'une dimension ayant de préférence trois fois 3 mm.

7. Dispositif selon une ou plusieurs des revendications 3 à 6, caractérisé en ce que, au voisinage des bords les plus espacés et les plus courts (16), l'élément chauffant (3) est pourvu d'extrémités analogues à des bornes (12) communiquant avec des câbles électriques (8,8').

8. Dispositif selon l'une ou plusieurs des revendications 3 à 7, caractérisé en ce que les bords les plus espacés et les plus courts (16) de l'élément chauffant (3) sont équipés d'un listel (11) en matière plastique.

**Patentansprüche**

1. Verfahren zum Verbinden eines Kunststoffrohrendes mit einer Schweißmuffe unter Verwendung einer Spannvorrichtung und eines gesonderten elektrischen Heizelements (3), das einen temperaturabhängigen Ohmschen Widerstand (R) hat und mit einem Schweißgenerator (21) verbunden ist, umfassend die folgenden Schritte:
das Heizelement (3) wird entlang dem Umfang des Rohrs (4, 4') in Anlage an dem Umfang verlegt und auf diesem Umfang befestigt;
die Schweißmuffe (1) wird so über das Heizelement (3) geschoben, daß sie das Heizelement (3) überdeckt;

die Schweißmuffe (1) wird durch die Spannvorrichtung so nach unten gedrückt, daß sie an dem Heizelement (3) anliegt;
elektrische Energie wird dem Heizelement (3) von dem Schweißgenerator (21) zum Aufheizen des Heizelements zugeführt;
**gekennzeichnet durch**
die folgenden Schritte:
Programmieren eines Mikroprozessors (20) mit einer gewünschten Fertigschweißtemperatur (T), mit einem Zeitraum, in dem diese Temperatur (T) zu halten ist, und mit einem spezifischen Erhöhungswert je Zeiteinheit entweder des Werts des Stroms (I) oder des Werts der Spannung (U) der dem Heizelement (3) zugeführten elektrischen Energie,
Berechnen des Ohmschen Widerstands (R) in dem Heizelement (3) auf der Grundlage von Werten des Stroms (I) und der Spannung (U), wenn das Heizelement (3) auf eine der Erweichungstemperatur des Kunststoffs entsprechende Temperatur (T1) aufgeheizt und der spezifische Erhöhungswert je Zeiteinheit erhalten ist,
Berechnen des Ohmschen Widerstands des Heizelements (3) bei der Fertigschweißtemperatur (T),
weiteres Aufheizen des Heizelements (3), bis die Fertigschweißtemperatur (T) erreicht ist, und Steuern von Strom (I) und Spannung (U) so, daß der Ohmsche Widerstand (R) des Heizelements (3) bei der Fertigschweißtemperatur (T) über den genannten Zeitraum konstantgehalten wird.

2. Verfahren nach Anspruch 1,
**gekennzeichnet durch**
Konstanthalten des Stromwerts (I), bis die Fertigschweißtemperatur (T) erreicht ist.

3. Vorrichtung zur Durchführung des Verfahrens nach Anspruch 1, mit einem bandförmigen Heizelement (3), das einen temperaturabhängigen Ohmschen Widerstand hat, und mit einem Schweißgenerator (21) zur Zuführung von elektrischer Energie zu dem Heizelement (3),
**gekennzeichnet durch**
Meßeinrichtungen (25, 26) zum Messen von Spannung und Strom der dem Heizelement (3) zugeführten elektrischen Energie, wobei die Meßeinrichtungen mit einem Mikroprozessor (20) verbunden sind und wobei der Mikroprozessor mit dem Schweißgenerator (21) verbunden ist, um ihn während des Schweißvorgangs zu steuern, d. h. um den zugeführten Strom (I) und die zugeführte Spannung (U) in solcher Weise zu steuern, daß beim Erreichen der Fertigschweißtemperatur diese Temperatur danach über einen vorbestimmten Zeitraum konstantgehalten wird.

4. Vorrichtung nach Anspruch 3,
   **dadurch gekennzeichnet,**
   daß das in einer Ebene gerade abgewickelt gesehene Heizelement (3) U-förmig ist mit einem Bodenteil (15), der gegenüber der Länge der Seiten des U relativ lang ist, wobei die Länge des Bodenteils derart ist, daß nach Anbringen auf dem Rohr (4, 4') das Heizelement einmal um den Umfang und entlang dem Umfang des Rohrs (4, 4,) verläuft und die am weitesten beabstandeten Seitenränder (16) des U unmittelbar aneinandergrenzend positioniert sind.

5. Vorrichtung nach Anspruch 3,
   **dadurch gekennzeichnet,**
   daß das in einer Ebene gerade abgewickelt gesehene Heizelement (3) als zwei L geformt ist, die am Ende des langen Teils (17) durch einen dazu senkrechten wischenteil (18) so miteinander verbunden sind, daß die kurzen Teile (19) der L in entgegengesetzte Richtungen verlaufen, und daß jeder lange Teil (17) eine solche Länge hat, daß nach Anbringen auf dem Rohr (4) das Heizelement (3) zweimal um den Umfang und entlang dem Umfang des Rohrs (4) verläuft.

6. Vorrichtung nach einem oder mehreren der Ansprüche 3 oder 5,
   **dadurch gekennzeichnet,**
   daß sie aus geglühtem Streckmetall mit fachförmigen Öffnungen einer Größe von bevorzugt 3 x 3 mm besteht.

7. Vorrichtung nach einem oder mehreren der Ansprüche 3-6,
   **dadurch gekennzeichnet,**
   daß angrenzend an die kürzesten und am weitesten beabstandeten Ränder (16) das Heizelement (3) mit anschlußelementartigen Enden (12) versehen ist, die mit elektrischen Kabeln (8, 8') verbunden sind.

8. Vorrichtung nach einem oder mehreren der Ansprüche 3-7,
   **dadurch gekennzeichnet,**
   daß die am weitesten beabstandeten kürzesten Ränder (16) des Heizelements (3) mit einer Kunststoffleiste (11) versehen sind.

## Fig.1

## Fig.2

## Fig.3

## Fig.4

Fig.5

Fig.6

# Fig.7

Fig.8

15V  150A    300°C  0,3 ohm

275°C

B

CURRENT: I

VOLTAGE: U

A

107°C

TEMPERATURE: T

ohmic resistance
(computed    $:R = U/I$ )

10 min.

EP 0 258 827 B1